# EUROPÄISCHE PATENTSCHRIFT

(11) **EP 0 527 421 B1**
(45) Veröffentlichungstag und Bekanntmachung des Hinweises auf die Patenterteilung: **03.01.1996**
(21) Anmeldenummer: 92113250.2
(22) Anmeldetag: 04.08.1992
(51) Int. Cl.: F16L 3/22, B65D 63/10

(54) **Verschlussband**
Bundling strap
Sangle de serrage

(30) Priorität: 08.08.1991 DE 4126225
(43) Veröffentlichungstag der Anmeldung: 17.02.1993
(73) Patentinhaber: Erich Schumm GmbH + Co. KG, D-71540 Murrhardt (DE)
(72) Erfinder: Kleeman, Karl Friedrich, W-7157 Murrhardt (DE)
(74) Vertreter: Patentanwälte Ruff, Beier, Schöndorf und Mütschele

(56) Entgegenhaltungen:
- DE-A- 2 647 804
- DE-B- 1 176 561
- DE-B- 1 189 447
- DE-B- 1 231 614
- FR-A- 2 387 859
- GB-A- 1 418 900
- NL-A- 6 400 477
- US-A- 3 837 047

## Beschreibung

Die Erfindung betrifft ein Verschlußband, wie es beispielsweise zum Zubinden von Beuteln, zum Bündeln von Leitungen oder auch zum Verschließen von Paketen verwendet werden kann.

Zum Zusammenfassen von Leitungen zu Bündeln sind Kabelbänder bekannt, die an einem Ende des Bandes eine Durchführung aufweisen, durch die das freie, leicht angespitzte Ende des Bandes hindurchgeführt werden kann. Die Durchführung verläuft senkrecht zur Richtung des Bandes, so daß das hindurchgeführte Teil absteht. Das Verschlußband kann nicht mehr geöffnet werden, so daß es nur zum einmaligen Gebrauch bestimmt und geeignet ist.

Es sind auch schon derartige Kabelbinder vorgeschlagen worden, die sich mit einem Werkzeug öffnen lassen. Ihre Wiederverwendbarkeit ist damit aber noch nicht gegeben, da auch hier der überstehende Teil abgeschnitten wird.

Zum Verschließen von Beuteln sind eine Vielzahl von derartigen Bändern bekannt, die sich aber meistens nur schwer schließen und genauso schwer wieder öffnen lassen. Sie werden daher häufig beim Öffnen zerstört.

Es ist bereits ein Verschlußband mit den Merkmalen des ersten Teils des Anspruchs 1 bekannt (DE-B-1 189 447). Bei diesem Verschlußband wirkt mit der Zahnreihe des Bandes eine auf einer Seitenwand der Durchführung des Haltekopfs angeordnete Zahnreihe zusammen. Dies führt zu einer guten Festlegung, jedoch ist das Zuziehen des Verschlußbandes unter Umständen schwergängig, insbesondere dann, wenn man die fertigungsbedingten Toleranzen so berücksichtigt, daß auch im ungünstigsten Fall noch ein sicheres Verschließen gegeben sein soll.

Weiterhin bekannt ist ein Verschlußband (FR-A-2 387 859), das zum Bündeln von Kabeln dienen und nicht geöffnet werden soll. Das Verschließen geschieht mit Hilfe eines Werkzeugs, und das überstehende Ende des Verschlußbandes wird abgetrennt.

Weiterhin bekannt ist ein Verschlußband (DE-B-1 231 614), bei dem eine Verrippung an dem konkav gewölbten Verschlußband an der Breitseite und an den Schmalseiten vorhanden ist.

Bei einem weiteren Verschlußband (DE-B-1 176 561) ist die Verzahnung an den Seitenkanten oder an der Breitseitenfläche des Verschlußbandes angeordnet.

Bei einem nicht lösbaren Bündelungsband für Kabel o.dgl. (US-A-3 837 047) sind in dem Haltekopf einzelne rechtwinklig gegenüber dem Verschlußband verlaufende Zungen angeordnet, die aus Gründen der Herstellung mit einer einfachen Form rechtwinklig gegenüber dem Verschlußband verlaufen müssen.

Der Erfindung liegt die Aufgabe zugrunde, ein Verschlußband zu schaffen, das sich leichtgängig schließen und ebenfalls leicht wieder öffnen läßt, so daß es zur häufigen Wiederverwendung geeignet ist. Die Leichtgängigkeit soll auch bei herstellungsbedingten Toleranzen immer gewährleistet sein.

Zur Lösung dieser Aufgabe schlägt die Erfindung ein Verschlußband mit den Merkmalen des Anspruchs 1 vor. Weiterbildungen sind Gegenstand der Unteransprüche. Das Verschlußband kann sowohl zum Verschließen von Beuteln, Säcken oder anderen unregelmäßig geformten Gegenständen als auch zum Zusammenfassen von Kabeln zu Bündel verwendet werden. Auch bei der Bündelung von Kabeln ist häufig das Hinzufügen eines weiteren Kabels erforderlich.

Durch die Anbringung mehrerer, elastisch verformbarer einzelner Zungen kann auch bei herstellungsbedingten Toleranzen dafür gesorgt werden, daß das Band sich leicht und ohne Kraftaufwand schließen läßt. Die Verteilung der Sperrwirkung auf mehrere Zungen führt ebenfalls zu einer größeren Widerstandsfähigkeit und damit zu einer verbesserten Wiederverwendungsmöglichkeit.

In Weiterbildung der Erfindung kann vorgesehen sein, daß die Durchführung derart ausgebildet ist, daß das Band in ihr etwa parallel zu dem unmittelbar an den Haltekopf angrenzenden Bereich des Bandes verläuft. Das aus dem Haltekopf herausragende Ende steht also nicht mehr von dem verschnürten Gegenstand ab, sondern verläuft hier parallel und kann sich anlegen.

Die Erfindung schlägt in Weiterbildung vor, daß die Durchführung einen den Querschnitt des Bandes im wesentlichen entsprechenden Querschnitt aufweisen kann. Bei einem Versuch, das Band durch Zurückziehen wieder zu öffnen, was durch Reaktionskräfte auftreten kann, wird daher die von den Zungen erzeugte Kraft auf die gesamte Durchführung verteilt, so daß die Flächenpressung gering bleibt.

Erfindungsgemäß kann vorgesehen sein, daß die Zungen an einer Seitenwand der Durchführung angeordnet sind. Dies kann insbesondere mit Vorteil bei einem rechtwinkligen Querschnitt die längere Seite sein.

Erfindungsgemäß kann vorgesehen sein, daß die der mit den Zungen versehenen Seitenwand gegenüberliegende Seitenwand der Durchführung einen Längsschlitz aufweist, der also in Längsrichtung des Bandes verläuft. Dieser Längsschlitz kann zum Erleichtern des Einlegens des Bandes als auch zur Ermöglichung der Öffnung des Verschlußbandes dienen.

Insbesondere kann vorgesehen sein, bei dem an dem freien Ende des Bandes eine Anfaßlasche vorgesehen ist, beispielsweise ein Ring, an dem der Benutzer einfach angreifen kann. Diese Anfaßlasche dient der Erleichterung sowohl beim Verschließen als auch beim Öffnen des Verschlusses.

Erfindungsgemäß kann vorgesehen sein, daß hinter der Anfaßlasche ein Einfädelabschnitt mit einem gegenüber dem Rest des Bandes veränderten Querschnitt ausgebildet ist. Dieser Einfädelabschnitt erleichtert das Einlegen des Bandes durch den Längsschlitz in die Durchführung.

Erfindungsgemäß kann vorgesehen sein, daß die Länge der Durchführung, gemessen in Längsrichtung des Bandes, größer ist als die Breite des Bandes, vorzugsweise mindestens doppelt so groß.

Bei der auf der einen Seite des Bandes angeordneten Verrippung kann es sich um einzelne Rippen handeln, deren Abstand dem Abstand der Zunge entspricht. Die Rippen können sägezahnartig angeordnet sein, um besser mit den schräg verlaufenden Zungen zusammenwirken zu können.

Weitere Merkmale, Einzelheiten und Vorzüge der Erfindung ergeben sich aus den Ansprüchen, der folgenden Beschreibung einer bevorzugten Ausführungsform der Erfindung sowie anhand der Zeichnung. Hierbei zeigen:
- Fig. 1: eine Seitenansicht eines Verschlußbandes nach der Erfindung;
- Fig. 2: eine Aufsicht auf das Verschlußband der Fig. 1;
- Fig. 3: einen Teilschnitt durch den Haltekopf und das Band in vergrößertem Maßstab;
- Fig. 4: einen Querschnitt durch den Haltekopf in vergrößertem Maßstab;
- Fig. 5: einen der Fig. 4 entsprechenden Querschnitt bei einer leicht abgeänderten Ausführungsform der Erfindung.
- Fig. 6: eine Aufsicht auf den Haltekopf 2 bei einer anderen Ausführungsform.

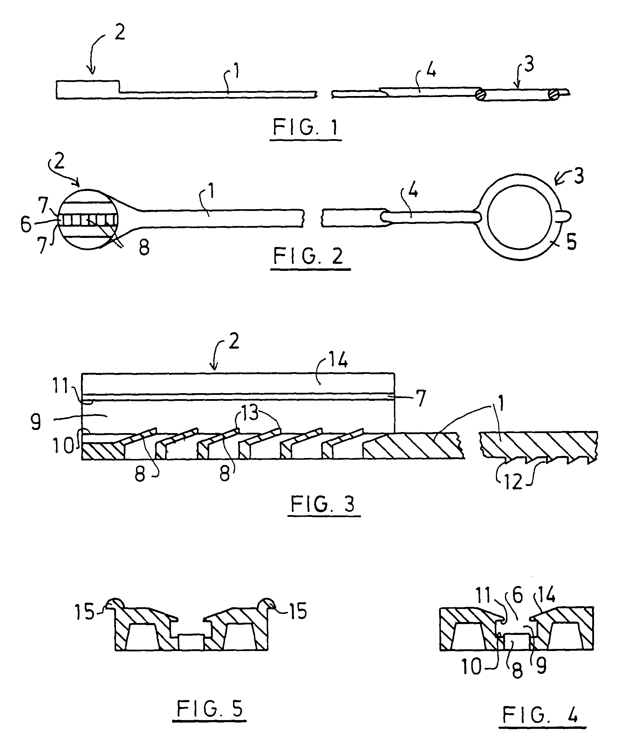

Das in Fig. 1 dargestellte Verschlußband enthält ein langgestrecktes, biegsames Band 1 aus einem geeigneten Kunststoff.

An seinem einen, in Fig. 1 linken Ende ist ein Haltekopf 2 einstückig angeformt. An dem gegenüberliegenden, in Fig. 1 also rechten Ende ist eine Anfaßlasche 3 ebenfalls einstückig angeformt. Unmittelbar hinter der Anfaßlasche 3 weist das Band einen Einfädelabschnitt 4 auf, in dem das Band 1 eine etwas größere Dicke aufweist als im übrigen Bereich.

Fig. 2 zeigt die Aufsicht auf das Verschlußband der Fig. 1 in gleichem Maßstab. Aus dem Vergleich der beiden Figuren ist zu sehen, daß das Band 1 eine größere Breite als Dicke aufweist, also einen rechteckigen Querschnitt. Der Haltekopf 2 weist kreisförmige Außenform auf. Die Anfaßlasche 3 ist als Ring 5 ausgebildet, durch den ein Benutzer seinen Finger stecken kann, um auf diese Weise das Verschlußband leichter handhaben zu können. Fig. 2 zeigt auch, daß im Einfädelabschnitt 4 die Breite des Bandes kleiner ist als im übrigen Bereich.

Der Haltekopf 2 enthält auf seiner Oberseite einen Längsschlitz 6, dessen zwischen seinen Längsseitenkanten 7 gemessene Breite kleiner ist als die Breite des Bandes 1 und etwa gleich groß wie die Breite des Einfädelabschnittes 4. Durch den Längsschlitz 6 sind einzelne Zungen 8 zu sehen, die zur Verriegelung des Bandes dienen.

Einzelheiten des Haltekopfs 2 sind in Fig. 3 dargestellt. Die Fig. 3 zeigt einen Längsschnitt durch den Haltekopf 2 im Bereich der Längsmittelebene. In dem Haltekopf 2 ist eine kanalartige Durchführung 9 für das Band 1 gebildet. Die Durchführung 9 wird auf der einen Seite von einer Seitenwand 10 begrenzt, in deren Bereich die einzelnen Zungen 8 einstückig angeformt sind. Die Durchführung 9 verläuft parallel zur Richtung des unverbogenen Bandes 1. Auf der der Seitenwand 10 gegenüberliegenden Seitenwand 11, die in Fig. 3 noch zu sehen ist, ist der Längsschlitz 6 angeordnet, dessen Seitenkante 7 in Fig. 3 ebenfalls zu sehen ist. Die Zungen 8 verlaufen schräg zur Längsrichtung und in Richtung auf das Ende des Haltekopfs 2, an dem das Band 1 angeformt ist. Sie verlaufen etwa unter einem Winkel von 20° gegenüber der Längsrichtung der Durchführung 9 bzw. des Bandes.

Auf der der Durchführung 9 abgewandten Längsseite des Bandes 1 sind über den größten Teil des Bandes 1 einzelne Rippen 12 angeformt, die insgesamt eine Verrippung bilden. Die Rippen sind etwa sägezahnförmig ausgebildet und ihr gegenseitiger Abstand entspricht dem Abstand der Zungen 8 voneinander. Die Sägezahnform ist so ausgebildet, daß die steilen Flanken in Richtung auf die freien Enden der Zungen 8 gerichtet sind.

Die zwischen den beiden Seitenwänden 10 und 11 der Durchführung 9 gemessene Höhe der Durchführung 9 entspricht etwa der Dicke des Bandes 1.

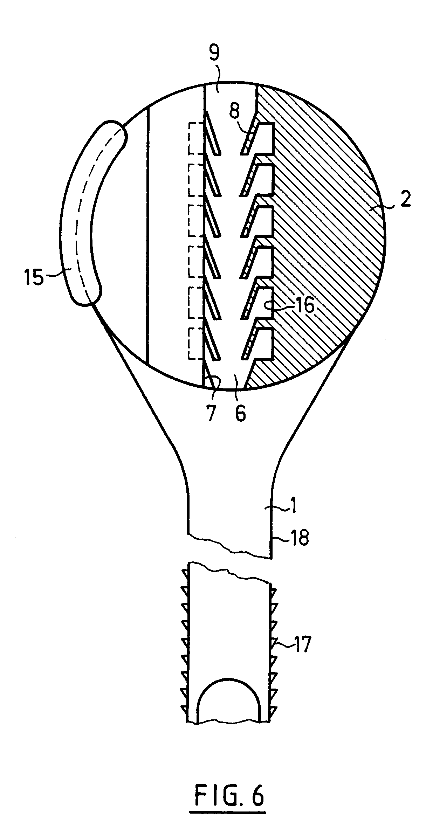

Fig. 4 zeigt einen Querschnitt durch den Haltekopf 2, aus dem die Form der Durchführung 9 genauer hervorgeht. Die Durchführung 9 enthält einen wesentlichen rechteckigen Querschnitt, der dem rechteckigen Querschnitt des Bandes 1 entspricht. Im Bereich der unteren Seitenwand 10 sind die einzelnen Zungen 8 angeordnet, die mit ihren freien Kanten 13 über die Seitenwand 10 vorstehen.

Die gegenüberliegende Seitenwand 11 weist den Längsschlitz 6 auf. Außerhalb der Durchführung sind beidseits der Kanten 7 des Längsschlitzes abgeflachte Bereiche 14 vorgesehen, die auch aus Fig. 3 zu sehen sind.

Fig. 5 zeigt eine gegenüber der Fig. 4 leicht abgeänderte Ausführungsform, bei der im Randbereich des Haltekopfs 2 Vorsprünge 15 angeformt sind, die sich in Aufsicht über einen Teil des Umfangs erstrecken. Da der Außendurchmesser des Haltekopfs 2 etwa dem Innendurchmesser des Rings 5 entspricht, kann bei angebrachtem Verschlußband der Ring 5 über den Haltekopf 2 aufgesetzt und hinter den nockenartigen Vorsprüngen 15 festgelegt werden.

Zum Anbringen des Verschlusses um beispielsweise einen Sack wird dieser, ausgehend von der Darstellung in Fig. 1, mit seiner in Fig. 1 unteren Seite an den Hals des Sackes gelegt. Die Anfaßlasche 3 wird angefaßt und dieses Ende im Uhrzeigersinn um den Hals des Sackes herumgelegt, bis ein geschlossener Kreis gebildet ist. Das Band wird mit seinem Einfädelabschnitt 4 bis über den Haltekopf 2 gelegt, und der Einfädelabschnitt 4 zwischen den Kanten 7 des Längsschlitzes 6 in die Durchführung 9 gelegt. Da die Breite des Einfädelabschnitts dem Abstand der Kanten 7 im wesentlichen gleich ist, ist dies möglich. Durch die abgeschrägten Bereiche 14 wird das Einfädeln zusätzlich erleichtert. Zum Verschließen wird nun an dem Ring 5 gezogen, so daß nunmehr der breitere Bereich des Bandes 1 in die Durchführung 9 zu liegen kommt, in der sie aufgrund ihrer Form festgehalten wird. Beim Festziehen biegen sich die Zungen 8 leicht aus, so daß sie dem Band fast keinen Widerstand entgegensetzen. Das Verschließen geschieht mit geringem Kraftaufwand. Bei dem Versuch, das Band wieder aufzuweiten, also aus der Durchführung 9 gegen die Wirkung der Zungen 8 herauszuziehen, gelangen die Zungen 8 mit ihren freien Kanten 13 zur Anlage an der Verrippung 12. Da die Durchführung 9 relativ lang ist, wird die durch das Aufstellen der Zungen 8 bewirkte Kraft auf die gesamte Länge der Durchführung 9, und zwar auf die Seitenwand 11 ausgeübt, die parallel zur Seitenwand 10 verläuft. Ein Öffnen des Bandes wird dadurch wirksam verhindert. Damit der Verschluß wieder geöffnet werden kann, greift der Benutzer an der Anfaßlasche 3, insbesondere dem Ring 5, an. Er zieht das Band senkrecht zur Längsrichtung der Durchführung 9. An den dem freien Ende des Bandes zugeordneten Ende der Durchführung 9 wird das Band nun unter relativ hoher Flächenpressung zwischen die beiden Kanten 7 des Längsschlitzes 6 gezwängt und der Haltekopf etwas auseinandergedrückt. Das Band kann nun vollständig aus dem Längsschlitz durch senkrechtes Ziehen herausgezwängt werden, ohne daß dies durch die Zungen 8 verhindert wird. Das wieder geöffnete Verschlußband kann in gleicher Weise wieder verwendet werden.

Während bei der in den Fig. 1 bis 5 dargestellten Ausführungsform die Zungen 8 auf dem dem Längsschlitz 6 gegenüberliegenden Boden der Durchführung 9 angeordnet sind und an einer Verrippung 12 angreifen, die auf einer flachen Seite des Bandes 1 angeordnet ist, sind bei der in Fig. 6 dargestellten Ausführungsform die Zungen 8 seitlich in der Durchführung 9 angeordnet. Die Ansicht der Fig. 6 zeigt den Haltekopf 2 zur Hälfte geschnitten, zur anderen Hälfte in Aufsicht. An beiden Schmalseiten 16 der Durchführung 9 sind mehrere hintereinander angeordnete und identisch ausgebildete Zungen 8 angeordnet, deren Anordnung spiegelsymmetrisch zur Längsachse ist. Im Einzelfall könnte auch die Anordnung von Zungen 8 an nur einer Schmalseite 16 ausreichen.

Die Orientierung der Zungen ist wieder die gleiche wie bei der Ausführungsform nach Fig. 1 bis 5.

Da bei der Ausführungsform nach Fig. 6 die Zungen 8 seitlich angeordnet sind, kann zur Verbesserung des Haltens vorgesehen sein, daß auch die Seitenkanten 18 des Verschlußbandes 1 eine Verrippung 17 aufweisen. Diese ist wiederum vorzugsweise an beiden Seitenkanten 18, also den Schmalseiten des im Querschnitt rechteckigen Bandes 1 angeordnet.

## Patentansprüche

1. Verschlußband mit einem langgestreckten, biegsamen Band (1), an dessen einer Seite eine Verrippung (12) ausgebildet ist, einem freien, zum Anfassen bestimmten Ende des Bandes (1), sowie einem Haltekopf (2), der an dem gegenüberliegenden Ende des Bandes (1) angeordnet ist und eine Durchführung (9) für das Band aufweist, die derart ausgebildet ist, daß das Band (1) in ihr etwa parallel zu dem unmittelbar an den Haltekopf (2) angrenzenden Bereich des Bandes (1) verläuft und einen dem Querschnitt des Bandes (1) im wesentlichen entsprechenden Querschnitt aufweist, wobei eine Seitenwand (11) der Durchführung (9) einen in Längsrichtung des Bandes (1) verlaufenden Längsschlitz (6) aufweist, sowie mit einer Festlegeeinrichtung für den in der Durchführung (9) angeordneten Teil des Bandes (1), dadurch gekennzeichnet, daß die Festlegeeinrichtung mehrere einzelne schräge elastisch verformbare Zungen (8) aufweist, die an der einen Seitenwand (10) der Durchführung (9) angeordnet sind und mit der Verrippung (12) des Bandes (1) zusammenwirken.

2. Verschlußband nach Anspruch 1, bei dem an dem freien Ende des Bandes eine Anfaßlasche (3) vorgesehen ist.

3. Verschlußband nach Anspruch 2, bei dem hinter der Anfaßlasche (3) ein Einfädelabschnitt (4) mit einem gegenüber dem Rest des Bandes (1) veränderten Querschnitt ausgebildet ist.

4. Verschlußband nach einem der vorhergehenden Ansprüche, bei dem die Länge der Durchführung (9) größer ist als die Breite des Bandes (1), vorzugsweise mindestens doppelt so groß wie diese.

5. Verschlußband nach einem der vorhergehenden Ansprüche, bei dem die Zungen (8) an der der Seitenwand (11) mit dem Längsschlitz (6) gegenüberliegenden Seitenwand (10) angeordnet sind.

6. Verschlußband nach einem der vorhergehenden Ansprüche, bei dem die Zungen (8) an mindestens einer Schmalseite (16) der Durchführung (9) angeordnet sind und die Verrippung (17) an mindestens einer Seitenkante (18) des Bandes (1) angeordnet ist.

## Claims

1. Closing band with an elongated, flexible band (1), on whose one side is formed a rib system (12), a free end of the band (1) intended for gripping and a holding head (2), which is positioned on the opposite end of the band and has a passage (9) for the band, which is constructed in such a way that the band (1) therein runs roughly parallel to the area of the band (1) directly adjacent to the holding head (2) and has a cross-section substantially corresponding to the cross-section of the band, a side wall (11) of the passage (9) has a longitudinal slot (6) running in the longitudinal direction of the band (1), as well as with a fixing device for the part of the band (1) located in the passage (9), characterized in that the fixing device has several individual, sloping, elastically deformable tongues (8), which are located on a side wall (10) of the passage (9) and cooperate with the rib system (12) of the band (1).

2. Closing band according to claim 1, wherein on the free end of the band is provided a gripping member (3).

3. Closing band according to claim 2, wherein behind the gripping member (3) a threading portion (4) is formed with a modified cross-section compared with the remainder of the band (1).

4. Closing band according to one of the preceding claims, wherein the length of the passage (9) exceeds the width of the band (1) and is preferably at least twice as large as the latter.

5. Closing band according to one of the preceding claims, wherein the tongues (8) are located on the side wall (10) opposite to the side wall (11) with the longitudinal slot (6).

6. Closing band according to one of the preceding claims, wherein the tongues (8) are located on at least one narrow side (16) of the passage (9) and the rib system (17) is arranged on at least one lateral edge (18) of the band (1).

## Revendications

1. Sangle de fermeture comprenant une sangle souple allongée (1) sur un des côtés de laquelle sont réalisées des nervures (12), comprenant également une extrémité libre de la bande (1) qui est destinée à être saisie, ainsi qu'une tête de maintien (2) qui est placée à l'extrémité opposée de la sangle (1) et qui présente un passage (9) pour la sangle, passage qui est réalisé de manière à ce que la sangle (1) s'y étende approximativement parallèlement à la zone de la sangle (1) qui est directement adjacente à la tête de maintien (2) et de façon que sa section transversale corresponde essentiellement à la section transversale de la sangle (1), sachant qu'une paroi latérale (11) du passage (9) présente une fente longitudinale (6) s'étendant dans la direction longitudinale de la sangle (1), et comprenant également un dispositif de fixation pour la partie de ia sangle (1) qui est placée dans le passage (9), caractérisée en ce que le dispositif de fixation présente plusieurs languettes (8) individuelles disposées en biais et pouvant être déformées élastiquement, qui sont situées dans l'une des parois latérales (10) du passage (9) et qui coopèrent avec les nervures (12) de la sangle (1).

2. Sangle de fermeture selon la revendication 1, à l'extrémité libre de laquelle est prévue une languette de préhension (3).

3. Sangle de fermeture selon la revendication 2, sur laquelle est réalisé, derrière la languette de préhension (3), un segment d'enfilage (4) dont la section transversale est différente de celle du reste de la sangle (1).

4. Sangle de fermeture selon l'une des revendications précédentes, dans laquelle la longueur du passage (9) est supérieure à la largeur de la sangle (1), de préférence au moins deux fois supérieure à celle-ci.

5. Sangle de fermeture selon l'une des revendications précédentes, dont les languettes (8) sont disposées sur la paroi latérale (10) qui est opposée à la paroi latérale (11) présentant la fente longitudinale (6).

6. Sangle de fermeture selon l'une des revendications précédentes, dont les languettes (8) sont disposées sur au moins un petit côté (16) du passage (9) et dont les nervures (17) sont placées sur au moins une arête latérale (18) de la sangle (1).
